# EUROPEAN PATENT SPECIFICATION

(11) **EP 1 914 149 B1**
(45) Date of publication and mention of the grant of the patent: **18.11.2009**
(21) Application number: 07117567.3
(22) Date of filing: 28.09.2007
(51) Int. Cl.: B62D 5/09, B62D 5/00

(54) **Electrical circuit for by-wire system**
Elektrische Schaltung für ein "by-wire-System"
Circuit électrique pour système électronique de type "by-wire"

(30) Priority: 17.10.2006 US 581813
(43) Date of publication of application: 23.04.2008
(73) Proprietor: Deere & Company, Moline, IL 61265-8098 (US)
(72) Inventor: Schick, Troy E., Cedar Falls, IA 50613 (US); Kearney, Joseph P., Cedar Falls, IA 50613 (US); Brandon, David E., Waterloo, IA 50701 (US); Hoy, Roger M., Williamsburg, VA 23188 (US); Dharia, Vijay M., Cedar Falls, IA 50613 (US)
(74) Representative: Bradl, Joachim

(56) References cited:
- DE-A1- 10 046 858
- DE-A1- 19 703 846
- DE-A1- 19 855 405

## Description

The present invention relates to an electric circuit or system for a function-by-wire system, such as a steer-by-wire or brake-by-wire system. Such a system is e.g. known from DE 198 55 405 A1; this document is forming the preamble of independent claim 1.

Steer or brake-by-wire systems in vehicles eliminate the mechanical link between the steering wheel (or the brake pedals) and the road wheels, and permit the system to achieve a desirable steering "feel" or other control characteristic. Such "by-wire" systems have been difficult to implement in vehicles because of cost, reliability and precision requirements.

Such a system must be designed to function despite the occurrence of a single point failure in the electrical system. Input sensor information must be reliably shared between redundant system channels. The aerospace industry satisfies this communication requirement by utilizing redundant time-deterministic communication busses. However, such determinant busses are expensive, are not currently produced at mobile equipment volumes, and have not been standardized on a common protocol.

It is therefore an object of the present invention to overcome the disadvantages mentioned above, especially to provide a electric system for a by-wire system which preferably is fault tolerant and which is cost effective.

These and other objects are achieved by the present invention, wherein an electronic system is provided according to claim 1.

Preferably the electronic system comprises a plurality of component position sensors, the first main processing unit being connected to a first set of the component position sensors, and the second main processing unit being connected to a second set of the component position sensors.

Each supervisory control unit could be connected to a respective one of the directional control valve units.

In a preferred embodiment, the function control system comprises a steer-by-wire steering system, the function actuator comprises a bi-directional steering actuator, the vehicle component comprises a steerable wheel, the function command unit comprises a steering wheel, and the command unit position sensor comprises a steering wheel position sensor.

Preferably the electronic system comprises a plurality of steered wheel position sensors, the first main processing unit being connected to a first set of the steered wheel position sensors, and the second main processing unit being connected to a second set of the steered wheel position sensors.

In one embodiment, an electric system is provided for a steer-by-wire steering system having a steering wheel, a pump, a reservoir, and a bi-directional steering actuator having left and right inlets, an electro-hydraulic valve system including solenoid operated valves.

An electronic system includes first and second pairs of steering wheel position sensors. The electronic system also includes a first channel and a second channel. The first channel includes a first main processing unit and a first supervisory control unit. The first main processing unit is connected to the first pair of steering wheel position sensors, to a first left directional control valve input, to a first right directional control valve input, to valve position sensors, and to the solenoid of a first shut-off valve.

The second channel includes a second main processing unit and a second supervisory control unit. The second main processing unit is connected to the second pair of steering wheel position sensors, to another left directional control valve input, to another right directional control valve input, to valve position sensors, and to the solenoid of a second shut-off valve.

The supervisory control units are connected to the sensors, to each other, to the main processor units, and to the solenoids of the shut-off valves.

The main processor units generate directional control signals for directional control valves as a function of the steering wheel position sensors.

In response to fault condition in the first directional control valve or in a portion of the system associated with the first directional control valve unit, the first channel closes the first shut-off valve so that the actuator is controlled only by the second directional control valve unit.

In normal conditions, the solenoids of the shut-off valves are both energized so that both directional control valve unit share in the control of hydraulic flow to and from the actuator. However, if a fault occurs the shut-off valve in the failing portion of the circuit is de-energized and allowed to close, so that the actuator can be controlled solely by the directional control valve unit in the non-failing portion of the circuit.

For a complete understanding of the objects, techniques, and structure of the invention reference should be made to the following detailed description and accompanying drawings, wherein:

Fig. 1 is a schematic diagram of a hydraulic circuit for a steer-by-wire steering system according to the present invention; and

Fig. 2 is a schematic diagram of an electronic system or circuit for a steer-by-wire steering system according to the present invention.

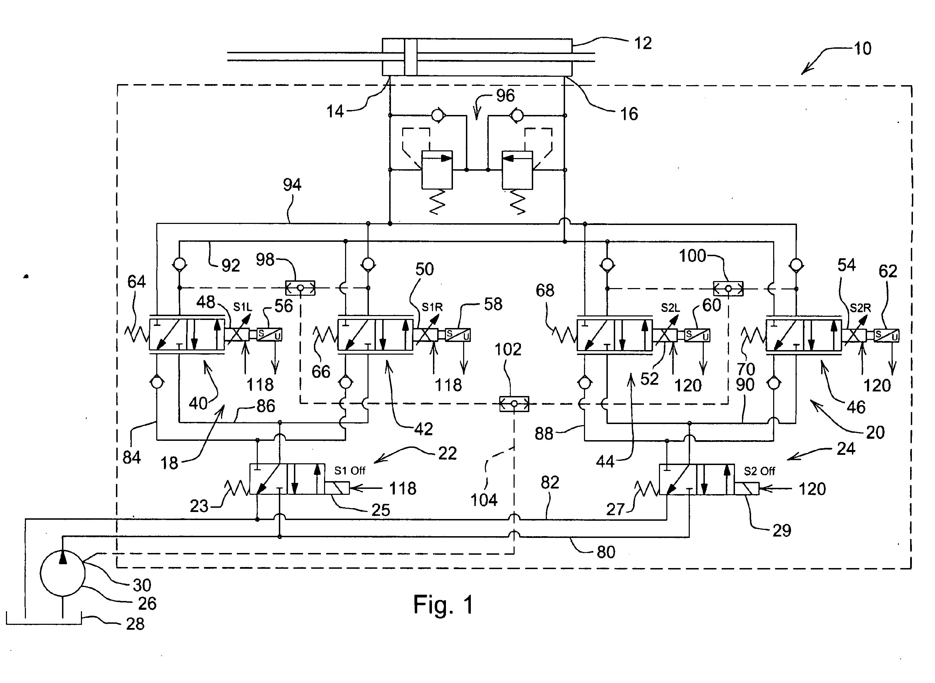

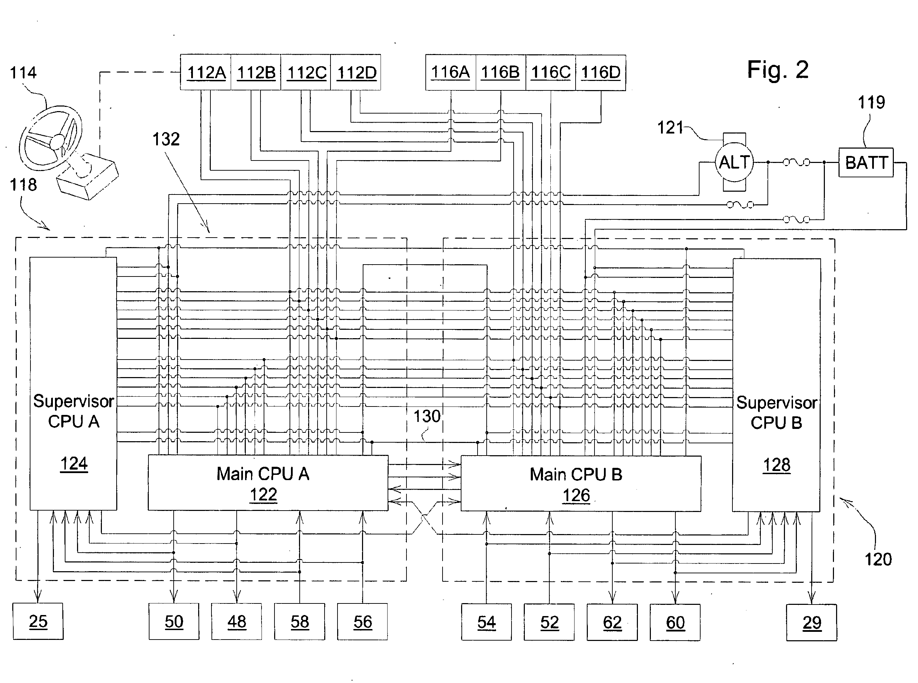

Referring to the Fig. 1, a steer-by-wire electronic system or circuit 10 includes a bi-directional hydraulic steering cylinder or function actuator 12 connected to vehicle components or steerable wheels (not shown) and with left and right inlet ports 14 and 16. System 10 also includes first and second solenoid operated directional control valve units 18 and 20, first and second shut-off valves 22 and 24, a pump 26 and a reservoir 28. Pump 26 includes a load sense port 30. Valve units 18 and 20 and shut-off valves 22 and 24 are connected and controlled by first and second electronic control units shown in Fig. 2.

Valve 22 includes a spring 23 and a solenoid 25, and valve 24 includes a spring 27 and a solenoid 29.

Valve unit 18 includes first and second solenoid operated 4-way, 2-position proportional valves 40 and 42. Valve unit 20 includes first and second solenoid operated 4-way, 2-position proportional valves 44 and 46. Each valve 40-46 includes a solenoid 48-54, a valve position sensor 56-62, and a spring 64-70. The valves are preferably small low-cost cartridge type valves. The valve position sensors 56-62 may be commercially available LVDT (linear variable differential transformer) type spool position sensors, or a suitable similar position sensor.

Lines 80 and 82 connect the pump 26 and reservoir 28, respectively, to inlet ports of shut-off valves 22 and 24. Line 84 connects a first outlet of shut-off valve 22 to inlets of valves 40 and 42. Line 86 connects a second outlet of shut-off valve 22 to inlets of valves 40 and 42. Line 88 connects a first outlet of shut-off valve 24 to inlets of valves 44 and 46. Line 90 connects a second outlet of shut-off valve 24 to inlets of valves 44 and 46. Check valves in lines 84 and 88 permit one-way fluid flow therethrough to shut-off vales 22 and 24.

Line 92 connects right actuator inlet 16 to an outlet of each of valves 40-46. Line 94 connects left actuator inlet 14 to an outlet of each of valves 40-46. Check valves in line 92 permit one-way fluid flow therethrough from valves 40 and 44 to actuator right inlet 16. Check valves in line 94 permit one-way fluid flow therethrough from valves 42 and 46 to actuator left inlet 14.

A relief and check valve circuit 96 operates in a known manner to limit pressure in the actuator 12 and in lines 92 and 94, such as when a steerable wheel (not shown) strikes an object, such a stump. Shuttle check valves 98, 100 and 102 communicate the highest pressure in the branches of lines 92 and 94 to the line sense port 30 of pump 26 via load sense line 104.

In an alternate embodiment (not shown) each of valve units 18 and 20 may include only a single 4-way, 3-position, spring-centered, dual solenoid operated valve.

Turning now to Fig. 2, the electrical system or circuit includes a plurality (preferably 4) of redundant steering wheel or command device sensors 112A-112D operatively connected to a steering wheel 114. Front redundant wheel angle sensors 116A-116D are operatively connected to steerable front wheels (not shown). Sensors 112A-112D are preferably commercially available position sensors, while sensors 116A-116D may be analog Hall effect or potentiometer type rotary angle sensors.

Pairs of each of sensors 112A-112D and 116A-116D are connected, respectively, to a first channel 118 and a second channel 120. First channel 118 includes a first main processing unit 122 and a first supervisory control unit 124. The first main processing unit 122 and first supervisory control unit 124 are connected to steering wheel position sensors 112A and 112B, to wheel angle sensors 116A and 116B, to solenoids 48 and 50, and to valve position sensors 56 and 58. The first supervisory control unit 124 is also connected to solenoid 25 of shut-off valve 22.

Second channel 120 includes a second main processing unit 126 and a second supervisory control unit 128. The second main processing unit 126 and the second supervisory control unit 128 are connected steering wheel position sensors 112C and 112D, to wheel angle sensors 116C and 116D, to solenoids 52 and 54, and to valve position sensors 60 and 62. The second supervisory control unit 128 is also connected to solenoid 29 of shut-off valve 24. A dedicated CAN bus 130 communicates non safety critical information, such as diagnostics and/or reprogramming, between the channels 118 and 120. Channels 118 and 120 are also connected to a conventional vehicle battery 119 and an alternator 121.

The main processor units 122 and 126 generate control signals (preferably pulse width modulated "PWM") for the solenoids of the directional control valve units 18 and 20 as a function of the sensed position of the steering wheel 114 and of the steered wheels (not shown). The supervisor processor units 124 and 128 control the shut-off valves 22 and 24 and operate to isolate the channels 118 and 120 from each other. The supervisor processor units 124 and 128 also monitor the health or condition of both channel by direct monitoring of the PWM outputs of the main processor units 122 and 126.

Lines 132 include the following connections between the controllers: supervisor 124 to main 122, main 122 to main 126, main 126 to main 122, supervisor 128 to main 122. These lines communicate pulse width modulated (PWM) signals between the main and supervisor processors, and when one of the processor detects a fault, that processor communicates the existence of that fault to the other processors by changing the duty cycle of the PWM signal communicated to the other processors. This information allows either channel to understand the health of the opposite channel, and to take the appropriate control action.

In normal conditions, the solenoids of valves 22 and 24 are both energized and valve unit 18 (valves 40 and 42) and valve unit 20 (valves 44 and 46) are all operated to share in the control of hydraulic flow to and from the actuator 12. However, if a fault occurs in valve unit 18 or in the circuitry associated with valve unit 18, then processor 124 will deactivate shut-off valve 22, and all the flow to actuator 12 will flow through shut-off valve 24 and will be controlled by valve unit 20 (valves 44 and 46). Similarly, if a fault occurs in valve unit 20 or in the circuitry associated with valve unit 20, then processor 128 will deactivate shut-off valve 24, and all the flow to actuator 12 will flow through shut-off valve 22 and will be controlled by valve unit 18 (valves 40 and 42).

Thus, the system of this invention includes two nearly identical electric (redundant) channels to guarantee the system functions in the event of a single component failure. In each channel, the main processor is responsible for controlling the directional steering control valves, and the supervisor processor controls the shut-off valve of the associated channel.

Critical input sensor information is communicated directly by a hardwired connection between the sensors and both channels.

In this system, all of the steering-related input sensor signals are communicated to both main and to both supervisor processors. Both the supervisor and main processors can calculate a steering valve control signal, but only main processors are connected to the steering control valves. However, the supervisor processors can monitor the steering control signals generated by the main processors, and can disable oil flow (isolate/shutoff) if a main processor generates an unrealistic or invalid control signal.

While the present invention has been described in conjunction with a specific embodiment, it is understood that many alternatives, modifications and variations will be apparent to those skilled in the art in light of the foregoing description. For example, this invention could be used in a variety of "by-wire" systems, such as a brake-by-wire system, as well as a steer-by-wire system. Accordingly, this invention is intended to embrace all such alternatives, modifications and variations which fall within the scope of the appended claims.

## Claims

1. An electronic system for a by-wire function control system, the function control system including a function actuator coupled to a vehicle component, an electro-hydraulic actuator control system having first and second electro-hydraulic directional control valve units (18, 20) and a pair of shut-off valves (22, 24), each operable to disable a respective one of the directional control valve units (18, 20), and an operator controlled function command unit (114), the electronic system comprising a plurality of command unit position sensors (112A, 112B, 112C, 112D); a first channel (118) comprising a first main processing unit (122) and a first supervisory control unit (124), the first main processing unit (122) being connected to a first set of the command unit position sensors (112A, 112B) and to a first one of the directional control valve units (18); and a second channel (120) comprising a second main processing unit (126) and a second supervisory control unit (128), the second main processing unit (126) being connected to a second set of the command unit position sensors (112C, 112D) and to a second one of the directional control valve units (20), the first main processing unit (122) generating control signals for the first directional control valve unit (18) as a function of the first set of the command unit position sensors (112A, 112B), and the second main processing unit (126) generating control signals for the second directional control valve unit (20) as a function of the second set of the command unit position sensors (112C, 112D), **characterized in that** each supervisory control unit (124, 128) being connected to each other as well as to all of the command unit position sensors (112A, 112B, 112C, 112D) and to both main processing units (122, 126), wherein each supervisory control unit (124, 128) is connected to a respective one of the shut-off valves (22, 24) causing to disable a respective one of the directional control valve units (18, 20) in response to detection of a fault condition.

2. The electronic system according to claim 1, **characterized by** further comprising a plurality of component position sensors (116A, 116B, 116C, 116D), the first main processing unit (122) being connected to a first set of the component position sensors (116A, 116B), and the second main processing unit (126) being connected to a second set of the component position sensors (116C, 116D).

3. The electronic system according to claim 1 or 2, **characterized in that** each supervisory control unit (124, 128) is connected to a respective one of the directional control valve units (18, 20).

4. The electronic system according to one of the preceding claims, **characterized in that** the function control system comprises a steer-by-wire steering system (10), the function actuator comprises a bi-directional steering actuator (12), the vehicle component comprises a steerable wheel, the function command unit comprises a steering wheel (114), and the command unit position sensor comprises a steering wheel position sensor (112A, 112B, 112C, 112D).

5. The electronic system according to claim 4, **characterized by** further comprising a plurality of steered wheel sensors (116A, 116B, 116C, 116D), the first main processing unit (122) being connected to a first set of the steered wheel sensors (116A, 116B), and the second main processing unit (126) being connected to a second set of the steered wheel sensors (116C, 116D).

## Patentansprüche

1. Elektronisches System für ein By-wire-Funktionssteuersystem, wobei das Funktionssteuersystem einen Funktionsaktor, der mit einer Fahrzeugkomponente gekoppelt ist, ein elektro-hydraulisches Aktorsteuersystem mit einer ersten und einer zweiten elektro-hydraulischen Richtungssteuerventileinheit (18, 20) und zwei Absperrventilen (22, 24), die jeweils betreibbar sind, um eine jeweilige der Richtungssteuerventileinheiten (18, 20) zu sperren, und eine bedienergesteuerte Funktionsbefehlseinheit (114) enthält, wobei das elektronische System Folgendes umfasst: mehrere Bedienelementpositionssensoren (112A, 112B, 112C, 112D) ; einen ersten Kanal (118), der eine erste Hauptverarbeitungseinheit (122) und eine erste Überwachungssteuereinheit (124) umfasst, wobei die erste Hauptverarbeitungseinheit (122) mit einer ersten Menge von Bedienelementpositionssensoren (112A, 112B) und einer ersten der Richtungssteuerventileinheiten (18) verbunden ist; und einen zweiten Kanal (120), der eine zweite Hauptverarbeitungseinheit (126) und eine zweite Überwachungssteuereinheit (128) umfasst, wobei die zweite Hauptverarbeitungseinheit (126) mit einer zweiten Menge der Bedienelementpositionssensoren (112C, 112D) und einer zweiten der Richtungssteuerventileinheiten (20) verbunden ist, wobei die erste Hauptverarbeitungseinheit (122) Steuersignale für die erste Richtungssteuerventileinheit (18) als Funktion der ersten Menge der Bedienelementpositionssensoren (112A, 112B) erzeugt und wobei die zweite Hauptverarbeitungseinheit (126) Steuersignale für die zweite Richtungssteuerventileinheit (20) als Funktion der zweiten Menge der Bedienelementpositionssensoren (112C, 112D) erzeugt, **dadurch gekennzeichnet, dass** die Überwachungssteuereinheiten (124, 128) jeweils miteinander und mit allen der Bedienelementpositionssensoren (112A, 112B, 112C, 112D) und mit beiden Hauptverarbeitungseinheiten (122, 126) verbunden sind, wobei jede Überwachungssteuereinheit (124, 128) mit einem jeweiligen der Absperrventile (22, 24) verbunden ist, um zu bewirken, dass eine jeweilige der Richtungssteuerventileinheiten (18, 20) als Reaktion auf Detektion eines Fehlerzustands abgeschaltet wird.

2. Elektronisches System nach Anspruch 1, **dadurch gekennzeichnet, dass** es ferner mehrere Komponentenpositionssensoren (116A, 116B, 116C, 116D) umfasst, wobei die erste Hauptverarbeitungseinheit (122) mit einer ersten Menge der Komponentenpositionssensoren (116A, 116B) und die zweite Hauptverarbeitungseinheit (126) mit einer zweiten Menge der Komponentenpositionssensoren (116C, 116D) verbunden ist.

3. Elektronisches System nach Anspruch 1 oder 2, **dadurch gekennzeichnet, dass** jede Überwachungssteuereinheit (124, 128) mit einer jeweiligen der Richtungssteuerventileinheiten (18, 20) verbunden ist.

4. Elektronisches System nach einem der vorhergehenden Ansprüche, **dadurch gekennzeichnet, dass** das Funktionssteuersystem ein Steer-by-wire-Lenksystem (10) umfasst, der Funktionsaktor einen bidirektionalen Lenkaktor (12) umfasst, die Fahrzeugkomponente ein lenkbares Rad umfasst, die Funktionsbefehlseinheit ein Lenkrad (114) umfasst und der Bedienelementpositionssensor einen Lenkradpositionssensor (112A, 112B, 112C, 112D) umfasst.

5. Elektronisches System nach Anspruch 4, **dadurch gekennzeichnet, dass** es ferner mehrere Sensoren (116A, 116B, 116C, 116D) gelenkter Räder umfasst, wobei die erste Hauptverarbeitungseinheit (122) mit einer ersten Menge der Sensoren (116A, 116B) gelenkter Räder verbunden ist und die zweite Hauptverarbeitungseinheit (126) mit einer zweiten Menge der Sensoren (116C, 116D) gelenkter Räder verbunden ist.

## Revendications

1. Système électronique pour un système de commande de fonction de type tout électrique (by-wire), le système de commande de fonction comportant un actionneur de fonction couplé à un composant de véhicule ; un système de commande d'actionneur électro-hydraulique comportant des première et deuxième unités formant distributeurs électro-hydrauliques (18, 20) et une paire de vannes d'isolement (22, 24), chacune permettant de désactiver une unité respective parmi les unités formant distributeurs électro-hydrauliques (18, 20) ; et une unité de commande de fonction (114) commandée par un opérateur,
le système électronique comprenant une pluralité de capteurs de position (112A, 112B, 112C, 112D) d'unité de commande ; un premier canal (118) comprenant une première unité de traitement principale (122) et une première unité de surveillance (124), la première unité de traitement principale (122) étant reliée à un premier groupe (112A, 112B) des capteurs de position d'unité de commande et à une première (18) des unités formant distributeurs ; et un deuxième canal (120) comprenant une deuxième unité de traitement principale (126) et une deuxième unité de surveillance (128), la deuxième unité de traitement principale (126) étant reliée à un deuxième groupe (112C, 112D) des capteurs de position d'unité de commande et à une deuxième (20) des unités formant distributeurs, la première unité de traitement principale (122) produisant des signaux de commande destinés à la première unité formant distributeur (18) en fonction du premier groupe (112A, 112B) des capteurs de position d'unité de commande, et la deuxième unité de traitement principale (126) produisant des signaux de commande destinés à la deuxième unité formant distributeur (20) en fonction du deuxième groupe (112C, 112D) des capteurs de position d'unité de commande,
le système électronique étant **caractérisé en ce que** chaque unité de surveillance (124, 128) est reliée à l'autre ainsi qu'à tous les capteurs de position (112A, 112B, 112C, 112D) d'unité de commande et aux deux unités de traitement principales (122, 126),
chaque unité de surveillance (124, 128) étant reliée à un robinet respectif parmi les robinets d'arrêt (22, 24) pour désactiver une unité respective parmi les unités formant distributeurs (18, 20) en réponse à la détection d'un état de défaillance.

2. Système électronique selon la revendication 1, **caractérisé en ce qu'**il comprend en outre une pluralité de capteurs de position (116A, 116B, 116C, 116D) de composant, la première unité de traitement principale (122) étant reliée à un premier groupe (116A, 116B) des capteurs de position de composant et la deuxième unité de traitement principale (126) étant reliée à un deuxième groupe (116C, 116D) des capteurs de position de composant.

3. Système électronique selon la revendication 1 ou 2, **caractérisé en ce que** chaque unité de surveillance (124, 128) est reliée à une unité respective parmi les unités formant distributeurs (18, 20).

4. Système électronique selon l'une quelconque des revendications précédentes, **caractérisé en ce que** le système de commande de fonction comprend un système de direction de type direction tout électrique (steer-by-wire) (10), l'actionneur de fonction comprend un actionneur de direction bidirectionnel (12), le composant de véhicule comprend une roue dirigeable, l'unité de commande de fonction comprend un volant de direction (114), et le capteur de position d'unité de commande comprend un capteur de position (112A, 112B, 112C, 112D) de volant de direction.

5. Système électronique selon la revendication 4, **caractérisé en ce qu'**il comprend en outre une pluralité de capteurs (116A, 116B, 116C, 116D) de roue dirigée, la première unité de traitement principale (122) étant reliée à un premier groupe (116A, 116B) des capteurs de roue dirigée et la deuxième unité de traitement principale (126) étant reliée à un deuxième groupe (116C, 116D) des capteurs de roue dirigée.
